# EUROPÄISCHE PATENTSCHRIFT

(11) **EP 3 380 748 B1**
(45) Veröffentlichungstag und Bekanntmachung des Hinweises auf die Patenterteilung: **26.08.2026**
(21) Anmeldenummer: 17800497.4
(22) Anmeldetag: 14.11.2017
(51) Int. Cl.: F16F 15/04, F16F 7/00

(54) **ANSCHLAGPUFFER MIT STOSSERKENNUNG UND/ODER AUSFALLERKENNUNG UND DRAHTLOSE DATENÜBERTRAGUNG**
IMPACT ABSORBER WITH IMPACT DETECTION AND/OR FAILURE DETECTION AND WIRELESS DATA TRANSMISSION
DISPOSITIF ANTICHOC AVEC DETECTION D'IMPACTS ET/OU DETECTION DES PANNES ET TRANSMISSION DE DONNÉES SANS FIL

(30) Priorität: 07.12.2016 DE 102016123696
(43) Veröffentlichungstag der Anmeldung: 03.10.2018
(73) Patentinhaber: Conductix-Wampfler GmbH, 79576 Weil am Rhein (DE)
(72) Erfinder: ENDLER, Niklas, 79739 Schwörstadt (DE); MAIER, Bernd, 79418 Schliengen (DE); WINTER, Nicholas, 79539 Lörrach (DE)
(74) Vertreter: Charrier Rapp & Liebau
(86) Internationale Anmeldenummer: PCT/EP2017/079174
(87) Internationale Veröffentlichungsnummer: WO 2018/104010

(56) Entgegenhaltungen:
- WO-A1-2006/051107
- WO-A1-2014/043940
- DE-B3- 102006 005 720
- KR-B1- 100 610 571
- US-A- 3 308 903
- US-A- 3 853 199
- US-A- 3 986 577
- US-A1- 2015 369 328
- US-B1- 8 635 916

## Beschreibung

Die Erfindung betrifft einen Anschlagpuffer nach dem Oberbegriff des Anspruchs 1. Derartige Anschlagpuffer finden beispielsweise Anwendung bei Laufwagen und stationären Endklemmen von Schleppleitungen, deren Laufwagen beim Zusammenfahren regelmäßig aneinander anstoßen und an deren Endklemme der erste Laufwagen regelmäßig anstößt.

Anschlagpuffer sind funktionsbedingt wiederholt einer kurzeitigen hohen mechanischen Belastung ausgesetzt, was im Laufe der Zeit unvermeidbar zu Verschleiß führt. Daher bedürfen Anschlagpuffer einer regelmäßigen Wartung in Form von Inspektionen und bei Bedarf, nämlich wenn der Verschleiß ein tolerierbares Ausmaß überschreitet, einer Erneuerung. Die Inspektionen sind arbeitsaufwendig, wenn ein Anschlagpuffer an einem exponierten und/oder schwer zugänglichen Ort angeordnet ist, wie es beispielsweise bei einer Schleppleitung einer großen Krananlage, die sich üblicherweise in großer Höhe befindet, der Fall ist. Darüber hinaus können Anschlagpuffer trotz regelmäßiger Wartung schlagartig ausfallen, was solange Erschütterungen überhöhter Intensität bei Kollisionen eines Objekts mit defektem Anschlagpuffer mit einem anderen Objekt zur Folge hat, bis die nächste planmäßige Inspektion stattfindet oder der Ausfall anhand einer erhöhten Geräuschentwicklung bei Kollisionen bemerkt wird.

Die DE 296 06 256 U1 offenbart einen Stoßdämpfer für ein Hochregallager mit einem Gehäuse sowie einem darin geführten und gegen ein Dämpfungsmedium abgestützten Kolben, an dem eine Kolbenstange angreift, die an ihrem äußeren, freien Ende ein Rammelement trägt. Zur Erfassung der Stellung der Kolbenstange ist ein als Näherungsschalter ausgebildeter Positionssensor innerhalb des Kolbens beziehungsweise der Kolbenstange integriert. Der Positionssensor zeigt an, ob sich die Kolbenstange in der ausgefahrenen Stellung befindet und der Stoßdämpfer somit zur bestimmungsgemäßen Absorption eines Stoßes auf das Rammelement bereit ist oder nicht. Der Positionssensor zeigt bei jeder bestimmungsgemäßen Absorption eines Stoßes durch den Stoßdämpfer eine Auslenkung der Kolbenstange aus der ausgefahrenen Stellung an, bis der Kolben wieder in seine Ausgangsposition zurückgekehrt ist.

Die US 6,203,079 B1 lehrt einen Aufpralldämpfer, der zur Anbringung am Heck eines an einer aufprallgefährdeten Stelle abgestellten Lastkraftwagens vorgesehen ist. Die durch einen Aufprall eines anderen Fahrzeugs verursachte Beschleunigung der Frontseite eines Stoßfängers wird gemessen und die Dämpfungskonstante eines hydraulischen Dämpfers in Abhängigkeit von dieser Beschleunigung eingestellt.

Die DE 41 21 497 A1 zeigt ebenfalls einen Aufpralldämpfer auf dem Gebiet der Fahrzeugtechnik, bei dem die Bewegungsgeschwindigkeit eines beweglich gelagerten Stoßfängers eines Fahrzeugs nach einem Aufprall gemessen und ein Sperrmechanismus zur Blockierung einer weiteren Bewegung aktiviert wird, wenn diese Geschwindigkeit oberhalb einer vorbestimmten Schwelle liegt.

Aus der US 3,853,199 ist ein Kollisionssensor zur Steuerung einer Sicherheitseinrichtung in einem Fahrzeug bekannt, der an einem Stoßfänger des Fahrzeugs angebracht ist. An der Vorderseite ist der Stoßfänger mit einer Platte aus Polyurethanschaum oder dergleichen versehen. An seiner Rückseite ist der Stoßfänger mit einer Trägerplatte verschraubt, wobei zwischen dem Stoßfänger und der Trägerplatte eine Schaumgummiplatte angeordnet ist. Ein taktiler Sensor ist an der Rückseite der Trägerplatte befestigt und weist einen Taster auf, der sich durch koaxiale Bohrungen in der Endplatte und der Schaumgummiplatte in Richtung eines hinteren Profils der Stoßstange erstreckt. Bei einer durch einen Aufprall des Stoßfängers auf ein Objekt verursachten Auslenkung des Stoßfängers gegenüber der Trägerplatte unter Kompression der Schaumgummiplatte wird der Taster des Sensors betätigt.

Auch die WO 2006/051107 A1 lehrt einen Aufprallsensor für ein Fahrzeug, der zur Steuerung einer Sicherheitseinrichtung vorgesehen ist. Hinter einem Stoßfänger befindet sich ein Federkörper, an oder durch den ein Auslöser in Form eines Seils oder dergleichen quer zur Fahrtrichtung des Fahrzeugs verläuft. Der Auslöser ist beidseitig am Chassis des Fahrzeugs befestigt und an einer der beiden Seiten ist ein Sensor angeordnet, welcher das Auftreten einer Zugspannung in dem Auslöser detektiert. Der Auslöser wird im Fall einer Verformung des Federkörpers durch den Anprall eines Objektes an seiner Vorderseite mit einer Zugspannung beaufschlagt, die dann von dem Sensor am Ende des Auslösers erfasst wird.

Die US 8,635,916 B1 offenbart ein internes Überwachungssystem für Dehnung oder Vibration eines mechanischen Strukturelements mit einer Sensoreinheit, die über eine autonome Stromversorgung und über eine Kommunikationseinheit zur drahtlosen Kommunikation mit einer externen Überwachungseinrichtung verfügt. Die autonome Stromversorgung enthält einen piezoelektrischen Generator, der elektrische Energie aus der Bewegung des mechanischen Strukturelements erzeugt, einen elektrischen Energiespeicher und einen Energieempfänger zur drahtlosen Aufnahme von Energie von einer externen Quelle. Die Sensoreinheit umfasst ferner eine Verarbeitungseinheit mit einer Steuerelektronik und einem Datenspeicher.

Die WO 2014/043940 A1 offenbart ein automatisch gelenktes Transportfahrzeug mit Puffern an der Front- und Heckseite. Die Puffer haben jeweils eine Feder und ein säulenförmiges Kollisionsglied, das bereits bei einer Berührung eines Hindernisses entgegen der Kraft der Feder ausgelenkt wird und dadurch einen elektrischen Auslöseschalter mechanisch betätigt. Dieser aktiviert bei seiner Betätigung ein Bremssystem zur Abbremsung des Fahrzeugs, um die Wahrscheinlichkeit einer Kollision zu verringern und das Eintreten einer heftigen Kollision effektiv zu verhindern.

Die DE 10 2006 005720 B3 beschreibt eine Endklemme für eine Schleppleitung mit einem Stoßdämpfer zum Dämpfen eines Anpralls des ersten Laufwagens an der Endklemme. Der Stoßdämpfer weist mindestens zwei Federkörper mit unterschiedlicher Charakteristik auf, die hintereinander angeordnet sind, um eine insgesamt nichtlineare Federcharakteristik mit zwei Abschnitten unterschiedlicher Elastizität zu erzeugen. Eine Ausrüstung des Stoßdämpfers mit Sensoren irgendwelcher Art ist nicht vorgesehen.

Ein weiterer relevanter Anschlagpuffer ist in der KR 100 610 571 B1 offenbart.

Aufgabe der Erfindung ist es, die Diagnose des Zustandes eines Anschlagpuffers zu erleichtern.

Die Erfindung löst die Aufgabe durch einen Anschlagpuffer mit den Merkmalen des Anspruchs 1 oder des Anspruchs 4. Vorteilhafte Weiterbildungen und Ausgestaltungen der Erfindung sind in den Unteransprüchen angegeben.

Erfindungsgemäß ist ein Anschlagpuffer zur Absorption kinetischer Energie bei einer Kollision zweier Objekte mit einem ersten Federkörper aus einem elastischen Material, der mit einem Trägerkörper verbunden ist, mit mindestens einem elektrischen Sensor ausgerüstet, der einen mechanisch betätigbaren Auslöser aufweist, bei dessen Betätigung der Sensor ein Signal abgibt. Es ist ein Betätigungsmechanismus vorgesehen, durch den der Auslöser des Sensors durch eine bei einer Kollision auf den Trägerkörper wirkende Kraft dann betätigt wird, wenn diese eine vorbestimmte Größe überschreitet, welche einen Ausfall des ersten Federkörpers durch Verschleiß oder bei intaktem erstem Federkörper eine zu hohe Kollisionsenergie anzeigt. Der Trägerkörper ist verschiebbar an einem Stützkörper gelagert und hat eine Ruhelage, in der er durch eine Vorspannung mindestens eines zweiten Federkörpers in einem vorbestimmten Abstand von dem Stützkörper gehalten wird, und der Sensor ist in einem an der dem ersten Federkörper abgewandten Rückseite des Trägerkörpers oder an der dem Trägerkörper zugewandten Vorderseite des Stützkörpers ausgebildeten Hohlraum angeordnet, und der Sensor weist mindestens ein aus einem Gehäuse des Sensors herausragendes Betätigungsglied auf, welches bei einer Annäherung des Trägerkörpers an den Stützkörper ausgelenkt wird und dadurch die Betätigung des Auslösers des Sensors bewirkt.

Hierdurch kann die bei Kollisionen auftretende Kraftbeaufschlagung des Trägerkörpers, deren Intensität sich durch eine Abnutzung des bei einer Kollision in Kontakt mit dem kollidierenden Objekt gelangenden ersten Federkörpers ändert, festgestellt und anhand des Auftretens einer zu großen Kraft eine übermäßige Abnutzung des ersten Federkörpers erkannt werden. Die Notwendigkeit einer Erneuerung eines verschlissenen oder defekten Anschlagpuffers kann auf diese Weise erkannt werden, bevor die Objekte, die durch den Anschlagpuffer bei Kollisionen geschützt werden, infolge einer unzureichenden Wirkung des Anschlagpuffers bei Kollisionen beschädigt werden. Aufwändige regelmäßige Inspektionen vor Ort durch Wartungspersonal erübrigen sich.

Ein geeigneter Betätigungsmechanismus wird in einfacher Weise realisiert, indem der verschiebbar an einem Stützkörper gelagerte Trägerkörper eine Ruhelage hat, in der er durch eine Vorspannung mindestens eines zweiten Federkörpers in einem vorbestimmten Abstand von dem Stützkörper gehalten wird. Durch die Auslegung der Elastizität des zweiten Federkörpers im Verhältnis zum ersten Federkörper kann die Ansprechschwelle des Sensors gezielt auf einen gewünschten Wert eingestellt werden. Durch die Anordnung des Sensors in einem Hohlraum ist dieser von dem Trägerkörper und dem Stützkörper sowie einem Flansch umgeben und dadurch vor ungünstigen Umgebungsbedingungen, z.B. bei einem Einsatz im Freien vor der Witterung geschützt. Dies verbessert seine Zuverlässigkeit entscheidend.

Zur Verbindung des Trägerkörpers mit dem Stützkörper ist es besonders zweckmäßig, dass ein mit dem Stützkörper verbundener Flansch den Trägerkörper umgreift und einen Anschlag bildet, gegen den der Trägerkörper durch den zweiten Federkörper in die Ruhelage gedrückt wird. Somit wird insgesamt nur eine minimale Anzahl von Komponenten für den Betätigungsmechanismus benötigt. Zur seiner Betätigung weist der Sensor mindestens ein aus einem Gehäuse des Sensors herausragendes Betätigungsglied auf, welches bei einer Annäherung des Trägerkörpers an den Stützkörper ausgelenkt wird und dadurch die Betätigung des Auslösers des Sensors bewirkt. Zweckmäßigerweise ist der Sensor in dem Hohlraum durch eine Klammer fixiert, die an dem Trägerkörper bzw. an dem Stützkörper befestigt ist.

Alternativ ist erfindungsgemäß ein Anschlagpuffer zur Absorption kinetischer Energie bei einer Kollision zweier Objekte mit einem ersten Federkörper aus einem elastischen Material, der mit einem Trägerkörper verbunden ist, mit mindestens einem elektrischen Sensor ausgerüstet, der einen mechanisch betätigbaren Auslöser aufweist, bei dessen Betätigung der Sensor ein Signal abgibt, der Sensor ist bezüglich des Trägerkörpers so angeordnet, dass der Auslöser durch eine Entfernung des ersten Federkörpers von dem Trägerkörper betätigt wird und der Sensor wird durch den ersten Federkörper so an dem Trägerkörper gehalten, dass sein Auslöser dann betätigt wird, wenn sich die Verbindung zwischen dem ersten Federkörper und dem Trägerkörper löst. Hierdurch kann ein besonders kritischer Totalausfall eines Anschlagpuffers in Form einer Ablösung des ersten Federkörpers von dem Trägerkörper, an dem er rückseitig befestigt ist, festgestellt werden und es können Schäden durch ungepufferte Kollisionen des Objektes, an dem der Anschlagpuffer den ersten Federkörper verloren hat, vermieden werden.

Bevorzugt weist der Sensor bei der alternativen Form der Erfindung ein aus seinem Gehäuse herausragendes Betätigungsglied auf, welches durch Federkraft in eine Ruhelage vorgespannt ist und die Abgabe eines Signals durch den Sensor dann auslöst, wenn es sich von einer aus der Ruhelage ausgelenkten Stellung in die Ruhelage zurück bewegt. Dieser funktionalen Auslegung des Sensors liegt das Ziel zugrunde, das Betätigungsglied beim Einbau des Sensors in den Anschlagpuffer in den ausgelenkten Zustand zu versetzen und in diesem Zustand so lange zu halten, wie erste Federkörper mit dem Trägerkörper verbunden ist, so dass eine Ablösung des ersten Federkörpers von dem Trägerkörper zuverlässig die Abgabe des Sensorsignals auslöst.

Vorzugsweise ist der Sensor bei der alternativen Form der Erfindung in einem an der Rückseite des ersten Federkörpers ausgebildeten Hohlraum oder in einem an der Vorderseite des Trägerkörpers ausgebildeten Hohlraum angeordnet. Zur Fixierung des Sensors in dem ersten Federkörper ist vorzugsweise ein Halteglied angeordnet, welches den Sensor in dem Hohlraum in einer Position fixiert, in der das Betätigungsglied eine aus der Ruhelage ausgelenkte Stellung hat, wenn der erste Federkörper mit dem Trägerkörper verbunden ist. Hierdurch kann die vorausgehend aufgezeigte Überwachungsfunktion mit einem minimalen Aufwand an Komponenten realisiert werden und der Sensor befindet sich im Inneren eines abgeschlossenen Raumes und ist keinen Umgebungseinflüssen, die seine Funktion beeinträchtigen könnten, wie bei einem Einsatz im Freien der Witterung, ausgesetzt.

Wenn sowohl eine Abnutzung des ersten Federkörpers, als auch eine Ablösung desselben von dem Trägerkörper detektiert werden soll, dann können zwei Sensoren vorgesehen werden, von denen einer bezüglich des Trägerkörpers so angeordnet ist, dass sein Auslöser durch eine bei einer Kollision auf den Trägerkörper wirkende Kraft betätigt wird, und der andere bezüglich des Trägerkörpers so angeordnet ist, dass sein Auslöser durch eine Entfernung des ersten Federkörpers von dem Trägerkörper betätigt wird, wobei der andere Sensor durch den ersten Federkörper so an dem Trägerkörper gehalten wird, dass sein Auslöser dann betätigt wird, wenn sich die Verbindung zwischen dem ersten Federkörper und dem Trägerkörper löst.

Hierdurch wird eine umfassende Überwachung der Funktionstüchtigkeit des Anschlagpuffers gewährleistet. Vorzugsweise enthält der Sensor einen elektromechanischen Energiewandler, welcher eine mechanische Bewegung des Auslösers in elektrische Energie umwandelt, und der Sensor wird ausschließlich von dem elektromechanischen Energiewandler mit elektrischer Energie versorgt wird. Hierdurch erübrigt sich nicht nur die Verlegung von Stromversorgungsleitungen zu dem Sensor, sondern es wird auch ein Batteriebetrieb, der wiederum eine regelmäßige Wartung in Form des Austauschs der Batterien erfordern würde, vermieden.

Weiterhin ist es vorteilhaft, dass der Sensor einen Sender enthält, der das Signal des Sensors drahtlos ausstrahlt, wenn ihm von dem elektromechanischen Energiewandler ein elektrischer Impuls mit einer vorbestimmten Mindestenergie zugeführt wird. Der Energiewandler fungiert auf diese Weise zugleich als Energiequelle und als Initiator der Ausgabe des Sensorsignals. Durch die drahtlose Ausstrahlung erübrigen sich Signalleitungen, deren Verlegung bei an beweglichen Objekten angeordneten Anschlagpuffern generell unerwünscht ist. Vorzugsweise enthält der Sensor einen Sender, der das Signal des Sensors drahtlos ausstrahlt, und der Sensor enthält einen Speicher mit einem sensorspezifischen Code, der ein Bestandteil des von dem Sender ausgestrahlten Signals ist. Dies ermöglicht bei einer Vielzahl zu überwachender Anschlagpuffer und drahtloser Kommunikation zwischen den Sensoren und einer stationären zentralen Überwachungseinheit eine Lokalisierung des von einem Sensor als abgenutzt oder defekt erkannten Anschlagpuffers.

Die Erfindung wird nachfolgend anhand eines detaillierten Ausführungsbeispiels mit Bezug auf die begleitenden Zeichnungen beschrieben. Diese zeigen:
- **Fig. 1**: eine seitliche Schnittansicht eines erfindungsgemäßen Anschlagpuffers im Ruhezustand,
- **Fig. 2**: eine Detailansicht des Ausschnitts A aus Fig. 1,
- **Fig. 3**: eine seitliche Schnittansicht eines erfindungsgemäßen mit einer kollisionsbedingten Kraft beaufschlagten Anschlagpuffers,
- **Fig. 4**: eine Detailansicht des Ausschnitts B aus Fig. 3,
- **Fig. 5**: eine seitliche Schnittansicht einer anderen Ausführungsform eines erfindungsgemäßen Anschlagpuffers im Ruhezustand,
- **Fig. 6**: eine Detailansicht des Ausschnitts C aus Fig. 5 und
- **Fig. 7**: eine seitliche Schnittansicht der Ausführungsform von Fig. 5 in einer anderen, gegenüber Fig. 5 um 90 Grad gedrehten Schnittebene.

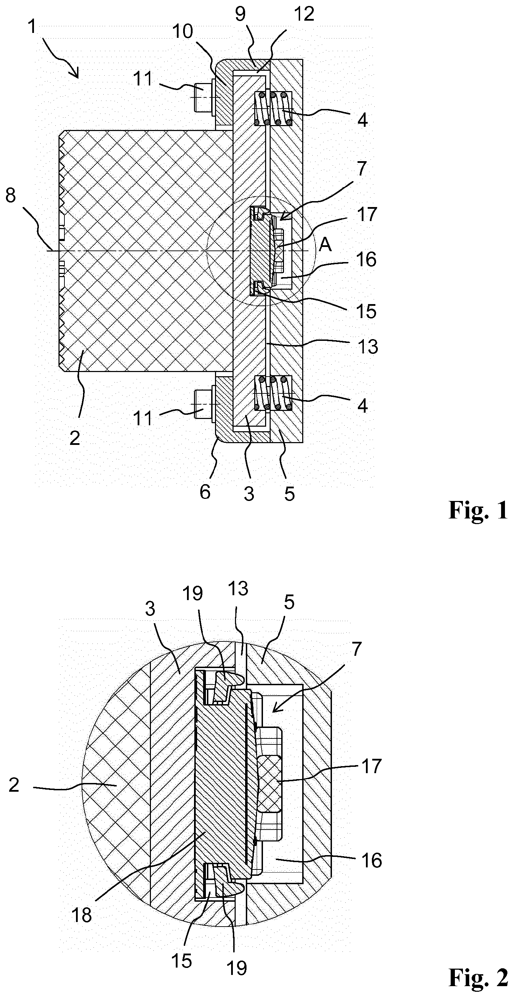

Wie Fig. 1 zeigt, weist ein erfindungsgemäßer Anschlagpuffer 1 als Hauptbestandteile einen ersten Federkörper 2, der beispielsweise zylinder- oder quaderförmig sei kann, einen starren plattenförmigen Trägerkörper 3, zweite schraubenförmige Federkörper 4, einen starren plattenförmigen Stützkörper 5, einen starren Befestigungsflansch 6 und einen Sensor 7 auf. Starr bedeutet hier, dass die Elastizität im Vergleich zu derjenigen des ersten Federkörpers 2 vernachlässigbar gering ist. Der Stützkörper 5 ist an seiner dem Trägerkörper 3 abgewandten Rückseite an einem in Fig. 1 nicht gezeigten beweglichen oder stationären Objekt befestigt, welches bei seinem Betrieb regelmäßig Kollisionen mit einem anderen Objekt ausgesetzt ist. Dieses andere Objekt kann deshalb mit einem Anschlagpuffer 1 gleicher Art ausgerüstet sein.

Der erste Federkörper 2, der beispielsweise aus Gummi oder aus einem zelligen Polyurethan-Elastomer bestehen kann, ist dazu bestimmt, sich bei einer an seiner Vorderseite, die in Fig. 1 die linke Seite ist, erfolgenden Kollision mit einem anderen Objekt in Richtung der Achse 8 elastisch zu verformen und dabei einen Teil der kinetischen Energie der an der Kollision beteiligten Objekte zu absorbieren. Er ist an seiner Rückseite fest mit der Vorderseite des Trägerkörpers 3 verbunden. Beispielsweise kann diese Verbindung durch Schrauben, welche durch Bohrungen in dem Trägerkörper 3 hindurchragen, und durch in den ersten Federkörper 2 eingebettete Gewindebuchsen, mit welchen besagte Schrauben verschraubt sind, hergestellt sein. Über die zweiten Federkörper 4 ist der Trägerkörper 3 rückseitig an dem Stützkörper 5 elastisch abgestützt.

Der Trägerkörper 3 ragt seitlich, d.h. senkrecht zu der Achse 8 allseitig über den ersten Federkörper 2 hinaus und ist mittels des Befestigungsflansches 6, der ihn mit einem axialen Abschnitt 9 vorzugsweise allseitig in axialer Richtung umgreift, an dem Stützkörper 5 fixiert. Hierbei stützt sich der axiale, d.h. in Richtung der Achse 8 verlaufende Abschnitt 9 an einem Randbereich der dem Trägerkörper 3 zugewandten Vorderseite des Stützkörpers 5 ab, während ein senkrecht dazu verlaufender lateraler Abschnitt 10 des Befestigungsflansches 6 auf einem Randbereich der Vorderseite des Trägerkörpers 3 aufliegt. Mittels mehrerer axialer Schrauben 11, welche durch Bohrungen in dem lateralen Abschnitt 10 des Befestigungsflansches 6 und in dem von diesem überdeckten Randbereich des Trägerkörpers 3 hindurchragen, ist der Befestigungsflansch 6 an dem Stützkörper 5 befestigt. In Fig. 1 sind nur die Köpfe von zwei dieser Schrauben 11 zu sehen, da die Schrauben 11 senkrecht zur Schnittebene der Fig. 1 gegenüber dieser versetzt sind. Die Dicke des Trägerkörpers 3 ist etwas geringer als die axiale Tiefe des durch den Befestigungsflansch 6 an seiner Rückseite gebildeten Hohlraumes 12, die durch die Länge des axialem Abschnitts 9 des Befestigungsflansches 6 definiert wird, so dass der Trägerkörper 3 zwischen dem lateralen Abschnitt 10 des Befestigungsflansches 6 und der Vorderseite des Stützkörpers 5 ein axiales Spiel hat.

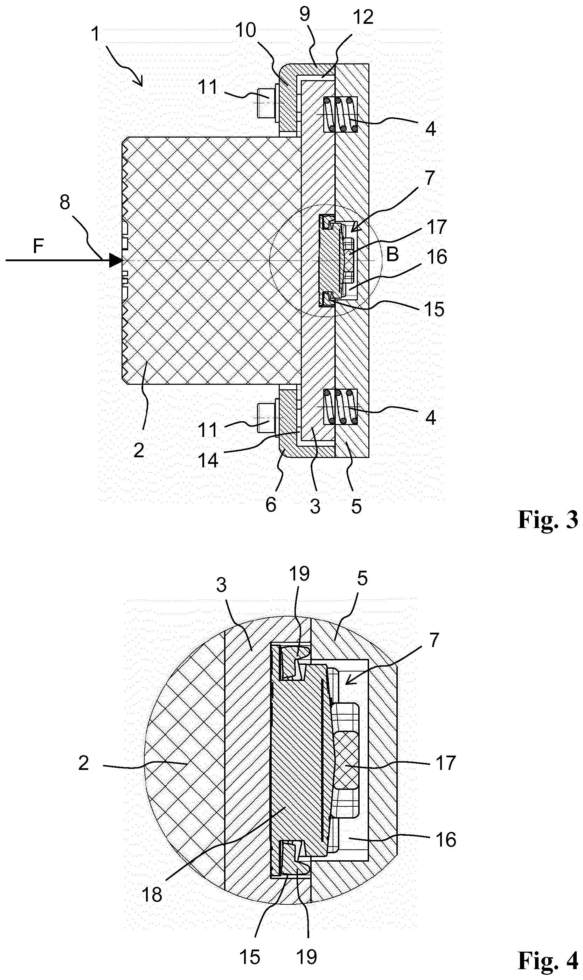

Die zweiten Federkörper 4 befinden sich im fertig montierten Zustand des Anschlagpuffers 1 unter Druckspannung, um den Trägerkörper 3 gegen die Rückseite des lateralen Abschnitts 10 des Befestigungsflansches 6 zu drücken, wodurch der Trägerkörper 3 und der erste Federkörper 2 trotz besagten axialen Spiels eine definierte axiale Ruhelage einnehmen, in der ein erster Spalt 13 zwischen der dem ersten Federkörper 2 abgewandten Rückseite des Trägerkörpers 3 und der dem Trägerkörper 3 zugewandten Vorderseite des Stützkörpers 5 existiert. Der Trägerkörper 3 kann jedoch durch Ausübung einer axialen Druckkraft F auf den ersten Federkörper 2, deren Betrag größer als eine vorbestimmte Schwelle ist, in axialer Richtung gegenüber dem Stützkörper 5 und dem Befestigungsflansch 6 verschoben werden, bis die Rückseite des Trägerkörpers 3 an der Vorderseite des Stützkörpers 5 anschlägt. Dann besteht anstelle des ersten Spalts 13 ein zweiter Spalt 14 gleicher Breite zwischen der dem ersten Federkörper 2 zugewandten Vorderseite des Trägerkörpers 3 und der Rückseite des lateralen Abschnitts 10 des Befestigungsflansches 6. Diese Situation ist in Fig. 3 dargestellt.

Im mittleren Bereich der Rückseite des Trägerkörpers 3 und im mittleren Bereich der Vorderseite des Stützkörpers 5 sind jeweils bevorzugt symmetrisch zu der Achse 8 einander gegenüberliegende Aussparungen 15 bzw. 16 ausgebildet, die zusammen einen Hohlraum bilden, welcher in der Ruhelage des Trägerkörpers 3 lateral in den ersten Spalt 13 übergeht. In dem Hohlraum ist ein Sensor 7 angeordnet. Er ist durch einen Befestigungsbügel 17 mit dem Trägerkörper 3 verbunden und wird durch diesen Befestigungsbügel 17 in der Aussparung 15 gehalten. Die Funktion des Sensors 7 wird nachfolgend anhand Fig. 2 erläutert wird, in der eine Vergrößerung des Ausschnitts B von Fig. 1 dargestellt ist.

Der Sensor 7 hat ein Gehäuse 18, welches von dem mit dem Trägerkörper 3 verbundenen Befestigungsbügel 17 in der Aussparung 15 des Trägerkörpers 3 fixiert und dabei axial gegen den Grund der Aussparung 15 gedrückt wird. Innerhalb des Gehäuses 18 befindet sich ein Auslöser, bei dessen Betätigung der Sensor ein drahtloses Signal abgibt, und ein Betätigungsmechanismus für den Auslöser. Der Betätigungsmechanismus besteht aus einer in dem Gehäuse 18 gelagerten, in Fig. 2 nicht sichtbaren Blattfeder, die annähernd parallel zu den einander zugewandten Oberflächen des Trägerkörpers 3 und des Stützkörpers 5 angeordnet und in ihrer Ruhelage so gewölbt ist, dass ihre Enden weiter vom Grund der Aussparung 15 des Trägerkörpers 3 entfernt sind als ihre Mitte. An beiden Enden dieser Blattfeder sind annähernd rechtwinkelige Winkelstücke 19 so befestigt, dass jeweils die Richtung eines Schenkels eines Winkelstücks 19 der Richtung des Endes der Blattfeder entspricht und der andere Schenkel in Richtung des Stützkörpers 5 weist.

Die Aussparung 15 des Trägerkörpers 3 erstreckt sich in lateraler Richtung weiter als die Aussparung 16 des Stützkörpers 5 und die Länge der Blattfeder und die Schenkellängen der Winkelstücke 19 sind so gewählt, dass diejenigen Schenkel, welche in Richtung des Stützkörpers 5 weisen, sich seitlich jenseits der Aussparung 16 des Stützkörpers 5 befinden. Ferner ragen diese Schenkel der Winkelstücke 19 seitlich über die denjenigen Bereich des Gehäuses 18 hinaus, der sich zwischen der Blattfeder und dem Befestigungsbügel 17 befindet. Dieser Bereich des Gehäuses 18 hat geringere laterale Abmessungen als die Aussparung 16 des Stützgliedes 5, so dass er zusammen mit dem Befestigungsbügel 17 in diese Aussparung 16 hineinragen kann. In dem in Fig. 2 dargestellten Ruhezustand des Anschlagpuffers 1 ragen die Enden der zu dem Stützglied 5 weisenden Schenkel der Winkelstücke 19 in axialer Richtung in den ersten Spalt 13 hinein und haben nur einen sehr geringen Abstand von der Vorderseite des Stützgliedes 5.

Wie in den Figuren 3 und 4 dargestellt ist, werden bei einer Beaufschlagung der Vorderseite des ersten Federkörpers 2 des Anschlagpuffers 1 mit einer axialen Kraft F, deren Größe eine vorbestimmte Schwelle überschreitet, die zweiten Federkörper 4 soweit komprimiert, dass die Rückseite des Trägerkörpers 3 an der Vorderseite des Stützkörpers 5 anschlägt und der erste Spalt 13 verschwindet. Die Sensoreinheit 7 und der Befestigungsbügel 17 ragen in diesem Zustand tiefer in die Aussparung 16 in dem Stützkörper 5 ein als in der Ruhelage. Deutlich ist dies anhand eines Vergleichs von Fig. 4, welche den Ausschnitt B von Fig. 3 zeigt, mit Fig. 2 erkennbar. Im Gegensatz zu Fig. 2 befinden sich die zu dem Stützkörper 5 weisenden Enden der Winkelstücke 19 jetzt in Kontakt mit der Vorderseite des Stützkörpers 5 außerhalb von dessen Aussparung 16 und werden entgegen der Federkraft der Blattfeder in die Aussparung 15 des Trägerkörpers 3 zurückgedrückt. wodurch die Blattfeder innerhalb des Gehäuses 18 in Vergleich zu Fig. 2 jetzt in der entgegengesetzten Richtung gewölbt ist. Dies kann beispielsweise durch eine symmetrische außermittige Lagerung der Blattfeder an zwei Stellen bewirkt werden.

Die Mitte der Blattfeder steht in deren Ruhelage, d.h. im Ruhezustand des Anschlagpuffers 1 in mechanischem Kontakt mit dem innerhalb des Gehäuses 18 befindlichen Auslöser des Sensors 7 oder sie befindet sich in unmittelbarer Nähe desselben. Beim Übergang der Blattfeder in die Wölbung entgegengesetzter Richtung infolge der Auslenkung des Trägerkörpers 3 in Richtung des Stützkörpers 5 durch die Wirkung der Kraft F betätigt der mittlere Abschnitt der Blattfeder, der sich dabei in axialer Richtung bewegt, den Auslöser des Sensors 7 und sorgt hierdurch für die Abgabe eines Signals, welches folglich anzeigt, dass der Anschlagpuffer 1 mit einer axialen Kraft F oberhalb einer vorbestimmten Schwelle beaufschlagt wurde. Entsprechend der Funktion eines Anschlagpuffers 1 besteht die Ursache einer solchen Kraft F darin, dass die auf den Trägerkörper 3 einwirkende kinetische Energie einer Kollision des Objekts, an dem der Anschlagpuffer 1 angeordnet ist, mit einem anderen Objekt oberhalb einer vorbestimmten Schwelle lag.

Die Schwelle für die Auslösung der Signalabgabe durch den Sensor 7 wird durch die Elastizitäten des ersten Federkörpers 2 und der zweiten Federkörper 4 bestimmt und kann somit bei gegebener Elastizität des ersten Federkörpers 2 durch eine entsprechende Wahl der Elastizität der zweiten Federkörper 4 auf einen gewünschten Wert eingestellt werden. Je steifer die zweiten Federkörper 4 ausgelegt sind, umso höher liegt die Auslöseschwelle des Sensors 7. Bei einem Ausfall des ersten Federkörpers 2 in Form einer teilweisen strukturellen Auflösung durch Verschleiß nimmt die Energieabsorptionsfähigkeit des ersten Federkörpers 2 ab. Dies führt zu einer Erhöhung der Amplitude des bei einer Kollision auf den Trägerkörper 3 wirkenden Kraftimpulses und es kommt dadurch zu einer Auslösung des Sensors 7, die den defekten Zustand des Anschlagpuffers 1 anzeigt.

Darüber hinaus erlaubt die Erfindung aber auch bei intaktem Federkörper 1 die Erkennung einer unzulässig hohen Belastung eines intakten Anschlagpuffers 1 durch eine zu hohe Kollisionsenergie, indem eine solche trotz der Dämpfungswirkung des Federkörpers 2 zur Überwindung der Vorspannung der Federkörper 2 durch den auf den Trägerkörper 3 wirkenden Kraftimpuls und folglich zur Auslösung der Abgabe des Signals durch den Sensor 7 führt.

Schließlich könnte die Elastizität der zweiten Federkörper 4 auch so gewählt werden, dass jede normale Kollision mit zulässiger kinetischer Energie zu einer Auslösung des Sensors 7 führt. In diesem Fall kann die Anzahl der Kollisionen während eines festgelegten Zeitraumes gezählt werden und beim Betrieb einer Anlage mit beweglichen Objekten, die mit erfindungsgemäßen Anschlagpuffern 1 ausgestattet sind, die Kollisionshäufigkeit der Objekte zum Zweck der Optimierung des Betriebsablaufs ermittelt werden. Auch könnte in diesem Fall ein fehlerhafter Betriebszustand der Anlage anhand des Ausbleibens von normalerweise zu erwartenden Kollisionsereignissen erkannt werden.

Es versteht sich, dass der Sensor 7 auch in einer um 180° gedrehten Lage in der Aussparung 16 des Stützkörpers 5 angeordnet sein könnte. In diesem Fall müsste die Aussparung 16 des Stützkörpers 5 in der Schnittansicht der Figuren 1 bis 4 eine größere laterale Ausdehnung haben als die Aussparung 15 des Trägerkörpers 3, so dass die Winkelstücke 19 lateral über die Aussparung 15 des Trägerkörpers 3 hinausragen und bei einer axialen Verschiebung des Trägerkörpers 3 durch diesen ausgelenkt würden. Der Befestigungsbügel 17 müsste dann mit dem Stützkörper 5 verbunden sein und den Sensor 7 an dem Stützkörper 5 fixieren, d.h. gegen den Grund der Aussparung 16 des Stützkörpers drücken.

Der Sensor 7 enthält in dem Gehäuse 18 einen elektromechanischen Energiewandler, welcher eine mechanische Bewegung seines Auslösers in elektrische Energie umwandelt. Ein solcher Energiewandler kann beispielsweise piezoelektrisch oder elektrodynamisch arbeiten. Mit dem elektromechanischen Energiewandler ist ein Funksender verbunden, der die zu seinem Betrieb erforderliche elektrische Leistung ausschließlich von dem elektromechanischen Energiewandler bezieht. Auf diese Weise erübrigt sich eine leitungsgebundene Stromversorgung für den Sensor ebenso wie eine leitungsgebundene Signalübertragung und es ist auch keine Batterie zum Betrieb nötig. Dies ist insbesondere bei einer Anordnung von Anschlagpuffern 1 an exponierten und/oder schwer zugänglichen Orten von großem Vorteil.

Obwohl die durch die Auslenkung einer Blattfeder geringer Abmessungen erzeugbare Energiemenge relativ gering ist, genügt sie doch dafür, ein Funksignal auszusenden, welches die Beaufschlagung eines Anschlagpuffers 1 mit einer Kraft oberhalb einer vorbestimmten Schwelle anzeigt, da hierzu keine bidirektionale Kommunikation erforderlich ist und das Signal nur eine geringe Datenmenge zu enthalten braucht und dementsprechend kurz sein kann. Sensoren mit einem integrierten elektromechanischen Energiewandler, die zum Betrieb keine Stromversorgung benötigen, sind Stand der Technik und brauchen daher hier nicht erläutert zu werden. Beispielsweise sind ein solcher Energiewandler und ein damit ausgestatteter Sensor in der EP 1 389 358 B1 offenbart.

Wenn der Trägerkörper 3 und der Stützkörper 5 beide aus Metall bestehen, so kann durch eine Bohrung oder eine Nut an der Oberfläche eines der beiden Körper eine Sendeantenne des Sensors aus dem durch die Aussparungen 15 und 16 gebildeten Hohlraum herausgeführt werden, um die Abschirmung des Sensors 7 durch die beiden metallischen Körper 3 und 5 zu überwinden.

Alternativ zu einer Vielzahl von schraubenförmigen zweiten Federkörpern 4 könnten auch zweite Federkörper anderer Form, z.B. Blattfedern verwendet werden oder es könnte auch nur ein einziger zweiter Federkörper in Form einer Tellerfeder verwendet werden. Ebenso könnte der Betätigungsmechanismus zur Auslösung der Signalabgabe durch den Sensor 7 innerhalb des Gehäuses 18 anders als hier beschrieben ausgeführt sein.

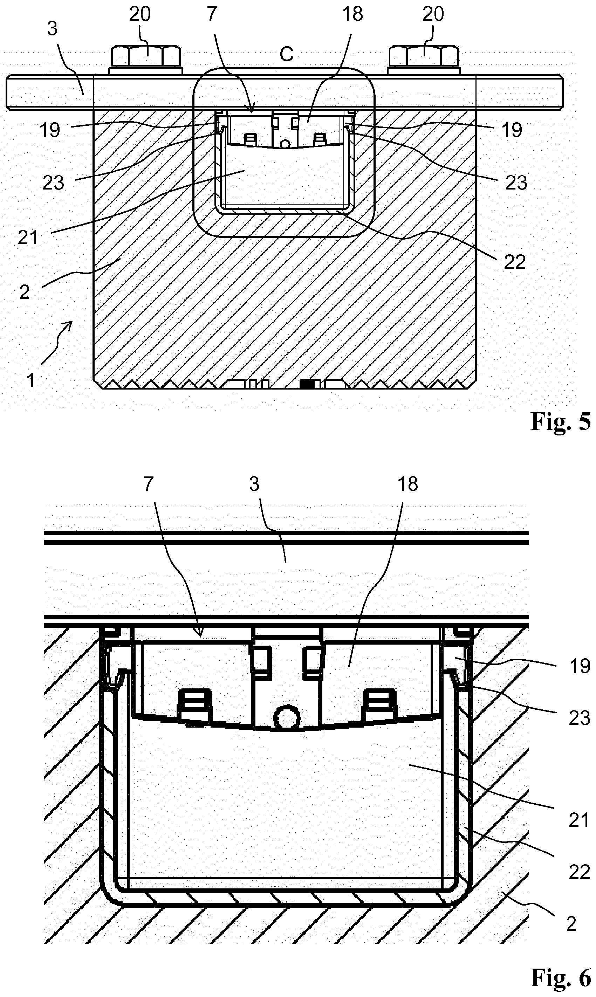

Eine zweite Ausführungsform der Erfindung, mittels derer ein Defekt an einem Anschlagpuffer 1 detektierbar ist, zeigen die Figuren 5 bis 8. Diese Ausführungsform kann je nach Bedarf sowohl in Kombination mit der ersten Ausführungsform, als auch alternativ zu dieser eingesetzt werden. Sie ist dazu vorgesehen, einen Defekt in Form einer Ablösung des ersten Federkörpers 2 eines Anschlagpuffers 1 von dem Trägerkörper 3, an dem er befestigt ist, zu detektieren. Wie bereits anhand der ersten Ausführungsform erwähnt, ist der erste Federkörper 2 mittels Schrauben 20, von denen in Fig. 5 nur Köpfe sichtbar sind, an dem Trägerkörper 3 befestigt. In den Federkörper 2 sind hierzu Gewindebuchsen eingebettet, in welche die durch den Trägerkörper 3 hindurchragenden Schrauben 20 eingeschraubt sind. Der erste Federkörper 2 liegt mit seiner Rückseite flächig an der Vorderseite des Trägerkörpers 3 an.

Wie in Fig. 5 und deutlicher in der Ausschnittvergrößerung von Fig. 6 zu sehen ist, ist in dem ersten Federkörper 2 an seiner dem Trägerkörper 3 zugewandten Rückseite ein Hohlraum 21 ausgebildet, in den ein becherförmiger Einsatz 22 so eingefügt ist, dass seine offene Seite zur Rückseite des ersten Federkörpers 2 weist und bündig mit der Rückseite des ersten Federkörpers 2 abschließt. In den Einsatz 22 ist ein Sensor 7 der gleichen Art eingesetzt, wie er bereits in ersten Ausführungsform vorgesehen ist. Der Einsatz 22 ist an die seitlichen Abmessungen des Gehäuses 18 des Sensors 7 einschließlich der seitlich aus diesem herausragenden Winkelstücke 19 angepasst und hat an zwei gegenüberliegenden Seiten Ausschnitte 23, in welche die Winkelstücke 19 so hineinragen, dass deren axiale Schenkel in den Ausschnitten 23 auf dem Einsatz 22 aufliegen.

Die Tiefe der Ausschnitte 23 ist so bemessen, dass der Auslöser des Sensors 7 betätigt wird, wenn der erste Federkörper 2 mit den Schrauben 20 an dem Trägerkörper 3 befestigt wird. Wenn die Rückseite des ersten Federkörpers 2 und damit auch die offene Seite des Einsatzes 22 zur Anlage an der Vorderseite des Trägers 3 gelangt, dann wird das Gehäuse 18 des Sensors 7 gegen die Vorderseite des Trägerkörpers 3 gedrückt, wobei die Kraftübertragung auf das Gehäuse 18 des Sensors 7 von dem ersten Federkörper 2 aus über den Einsatz 22, die Winkelstücke 19 und die Blattfeder im Inneren des Gehäuses 18, an der die Winkelstücke befestigt sind, erfolgt. Dabei werden die Winkelstücke 19 aus ihrer Ruhelage ausgelenkt und die Blattfeder bewegt sich ebenfalls aus ihrer Ruhelage in eine ausgelenkte Stellung mit anderer Wölbung. Sie könnte dabei den Auslöser des Sensors 7 betätigen und den Sensor 7 zur Abgabe eines Signals veranlassen, doch ist dies nicht von Interesse und daher auch nicht notwendig.

Vielmehr kommt es darauf an, dass die Abgabe des Sensorsignals durch eine Bewegung der Blattfeder mit den endseitigen Winkelstücken 19 zurück in ihre Ruhelage ausgelöst wird. Eine solche Bewegung findet nämlich dann statt, wenn der erste Federkörper 2 durch Abnutzung soweit zerstört wird, dass sich seine Befestigung über die Schrauben 20 an dem Trägerkörper 3 löst und er sich infolge der Wirkung der Schwerkraft von dem Trägerkörper 3 ablöst. In diesem Fall bewegt sich die Blattfeder des Sensors 7 mit den Winkelstücken 19, die in ihrer ausgelenkten Stellung elastisch gespannt ist, selbsttätig in ihre Ruhelage zurück und betätigt dabei den Auslöser des Sensors 7, woraufhin dieser ein Signal abgibt. Dieses Signal zeigt dann den gravierenden Defekt der kompletten Ablösung des ersten Federkörpers 2 von dem Trägerkörper 3 an.

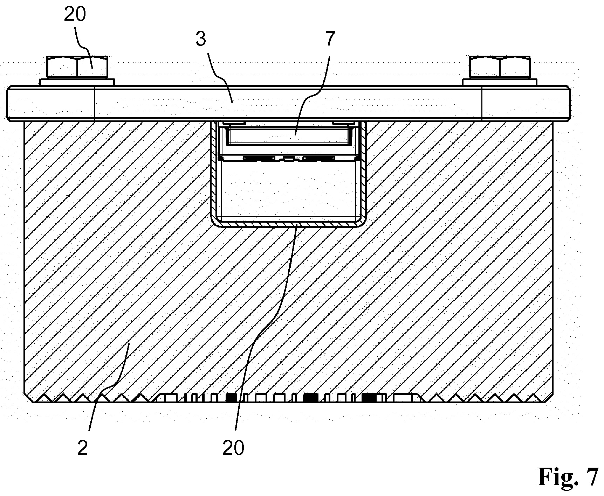

In Fig. 7, die eine seitliche Schnittansicht der zweiten Ausführungsform in einer anderen, gegenüber Fig. 5 um 90 Grad gedrehten Schnittebene zeigt, ist erkennbar, dass der becherförmige Einsatz 22 abseits der in der Schnittansicht der Figuren 5 und 6 sichtbaren Ausschnitte 23 bis zur Rückseite des ersten Federkörpers 2 reicht und bündig mit dieser abschließt, so dass er im fertig montierten Zustand des ersten Federkörpers 2 an der Vorderseite des Trägerkörpers 3 anliegt. Hierdurch ergibt sich in Verbindung mit einer geeigneten Tiefe der Ausschnitte 23 eine definierte Position des Sensors 7, in welcher die Blattfeder des Sensors 7 in ihrer ausgelenkten Stellung fixiert wird. Solange der Einsatz 22 an der Vorderseite des Trägerkörpers 3 anliegt, wird der Sensor 7 in dieser Position gehalten. Der Einsatz 22 ist im Vergleich zu dem ersten Federkörper 2 starr ausgebildet, insbesondere aus Metall gefertigt, so dass er sich beim Anprall eines anderen Objektes an der Vorderseite des ersten Federkörpers 2 im Gegensatz zu diesem nicht verformt und die Lage des Gehäuses 18 des Sensors 7 somit erhalten bleibt.

In einer nicht gezeigten alternativen Ausführungsform könnte der Sensor 7 auch in einem Hohlraum auf der Vorderseite des Trägerkörpers 3 angeordnet sein und durch ein in den ersten Federkörper 2 an dessen Rückseite eingebettetes Halteglied, beispielsweise in Form einer Metallplatte, in diesem Hohlraum in einer Stellung fixiert werden, in der die Winkelstücke 19 durch besagtes Halteglied ausgelenkt werden, so dass auch in diesem Fall der Auslöser des Sensors beim Einbau betätigt und anschließend in dieser Stellung gehalten würde. Bei einer Ablösung des ersten Federkörpers 2 von dem Trägerkörper 3 würde eine Entlastung der Winkelstücke 19 erfolgen und die Blattfeder im Inneren des Sensors 7 würde sich in ihre Ruhelage zurückbewegen und die erneute Abgabe des Sensorsignals auslösen und damit besagte Ablösung melden.

Es leuchtet ein, dass die beiden vorausgehend erläuterten Ausführungsformen der Erfindung ohne weiteres miteinander kombiniert werden können. So kann in dem Federkörper 2 der ersten Ausführungsform rückseitig ein Hohlraum 21 ausgebildet und ein Einsatz 22 sowie ein zweiter Sensor 7 angeordnet sein, wie es anhand der Figuren 5 bis 7 beschrieben wurde. Die Köpfe der Schrauben 20 können in diesem Fall entweder in dem Trägerkörper 3 versenkt sein oder der Stützkörper 5 kann für deren Aufnahme geeignete Aussparungen aufweisen. Mittels einer solchen Kombination beider Ausführungsformen können sowohl die vorausgehend anhand der ersten Ausführungsform erläuterten Überwachungsfunktionen realisiert werden, als auch eine vollständige Ablösung des ersten Federkörpers 2 von dem Trägerkörper 3 festgestellt werden. Nachdem eine solche Kombinationslösung zwei separate Sensoren 7 enthält, können anhand der unterschiedlichen Sensorsignale, die jeweils einen sensorspezifischen Code enthalten, die erfassten Ereignisse unterschieden werden.

Es kann aber auch jede Ausführungsform für sich allein eingesetzt werden, wenn eine umfassende Überwachung nicht als nötig erachtet wird und primär nur eine bestimmte Art von Defekt zu erwarten ist oder als besonders kritisch erachtet wird.

### Bezugszeichen

- 1: Anschlagpuffer
- 2: Erster Federkörper
- 3: Trägerkörper
- 4: Zweiter Federkörper
- 5: Stützkörper
- 6: Befestigungsflansch
- 7: Sensor
- 8: Achse
- 9: Axialer Flanschabschnitt
- 10: Radialer Flanschabschnitt
- 11: Schraube
- 12: Hohlraum
- 13: Erster Spalt
- 14: Zweiter Spalt
- 15: Aussparung
- 16: Aussparung
- 17: Befestigungsbügel
- 18: Gehäuse
- 19: Winkelstück
- 20: Schraube
- 21: Hohlraum
- 22: Einsatz
- 23: Ausschnitt

## Patentansprüche

1. Anschlagpuffer (1) zur Absorption kinetischer Energie bei einer Kollision zweier Objekte, mit einem ersten Federkörper (2) aus einem elastischen Material, der mit einem verschiebbar an einem Stützkörper (5) gelagerten Trägerkörper (3) verbunden ist, und mit mindestens einem elektrischen Sensor (7), der einen mechanisch betätigbaren Auslöser aufweist, bei dessen Betätigung der Sensor (7) ein Signal abgibt, wobei ein Betätigungsmechanismus vorgesehen ist, durch den der Auslöser des Sensors (7) durch eine bei einer Kollision auf den Trägerkörper (3) wirkende Kraft dann betätigt wird, wenn diese eine vorbestimmte Größe überschreitet, welche einen Ausfall des ersten Federkörpers (2) durch Verschleiß oder bei intaktem erstem Federkörper (2) eine zu hohe Kollisionsenergie anzeigt, **dadurch gekennzeichnet, dass** der Trägerkörper (3) eine Ruhelage hat, in der er durch eine Vorspannung mindestens eines zweiten Federkörpers (4) in einem vorbestimmten Abstand von dem Stützkörper (5) gehalten wird, dass der Sensor (7) in einem an der dem ersten Federkörper (2) abgewandten Rückseite des Trägerkörpers (3) oder an der dem Trägerkörper (3) zugewandten Vorderseite des Stützkörpers (5) ausgebildeten Hohlraum (15) bzw. (16) angeordnet ist, und dass der Sensor (7) mindestens ein aus einem Gehäuse (18) des Sensors (7) herausragendes Betätigungsglied (19) aufweist, welches bei einer Annäherung des Trägerkörpers (3) an den Stützkörper (5) ausgelenkt wird und dadurch die Betätigung des Auslösers des Sensors (7) bewirkt.

2. Vorrichtung nach Anspruch 1, **dadurch gekennzeichnet, dass** ein mit dem Stützkörper (5) verbundener Flansch (6) den Trägerkörper (3) umgreift und einen Anschlag bildet, gegen den der Trägerkörper (3) durch den zweiten Federkörper (4) in die Ruhelage gedrückt wird.

3. Vorrichtung nach einem der Ansprüche 1 oder 2, **dadurch gekennzeichnet, dass** der Sensor (7) in dem Hohlraum (15) bzw. (16) durch eine Klammer (17) fixiert ist, die an dem Trägerkörper (3) bzw. an dem Stützkörper (5) befestigt ist.

4. Anschlagpuffer (1) zur Absorption kinetischer Energie bei einer Kollision zweier Objekte, mit einem ersten Federkörper (2) aus einem elastischen Material, der mit einem Trägerkörper (3) verbunden ist, und mit mindestens einem elektrischen Sensor (7), der einen mechanisch betätigbaren Auslöser aufweist, bei dessen Betätigung der Sensor (7) ein Signal abgibt, **dadurch gekennzeichnet, dass** der Sensor (7) bezüglich des Trägerkörpers (3) so angeordnet ist, dass der Auslöser durch eine Entfernung des ersten Federkörpers (2) von dem Trägerkörper (3) betätigt wird, und dass der Sensor (7) durch den ersten Federkörper (2) so an dem Trägerkörper (3) gehalten wird, dass sein Auslöser dann betätigt wird, wenn sich die Verbindung zwischen dem ersten Federkörper (2) und dem Trägerkörper (3) löst.

5. Vorrichtung nach Anspruch 4, **dadurch gekennzeichnet, dass** der Sensor (7) ein aus seinem Gehäuse (18) herausragendes Betätigungsglied (19) aufweist, welches durch Federkraft in eine Ruhelage vorgespannt ist und die Abgabe eines Signals durch den Sensor (7) dann auslöst, wenn es sich von einer aus der Ruhelage ausgelenkten Stellung in die Ruhelage zurück bewegt.

6. Vorrichtung nach Anspruch 4 oder 5, **dadurch gekennzeichnet, dass** der Sensor (7) in einem an der Rückseite des ersten Federkörpers (2) ausgebildeten Hohlraum (21) oder in einem an der Vorderseite des Trägerkörpers (3) ausgebildeten Hohlraum angeordnet ist.

7. Vorrichtung nach Anspruch 6, **dadurch gekennzeichnet, dass** in dem ersten Federkörper (2) ein Halteglied (22) angeordnet ist, welches den Sensor (7) in dem Hohlraum in einer Position fixiert, in der das Betätigungsglied (19) eine aus der Ruhelage ausgelenkte Stellung hat, wenn der erste Federkörper (2) mit dem Trägerkörper (3) verbunden ist.

8. Vorrichtung nach einem der Ansprüche 1 bis 7, **dadurch gekennzeichnet, dass** zwei Sensoren (7) vorgesehen sind, von denen einer bezüglich des Trägerkörpers (3) so angeordnet ist, dass sein Auslöser durch eine bei einer Kollision auf den Trägerkörper (3) wirkende Kraft betätigt wird, und der andere bezüglich des Trägerkörpers (3) so angeordnet ist, dass sein Auslöser durch eine Entfernung des ersten Federkörpers (2) von dem Trägerkörper (3) betätigt wird, und dass der andere Sensor (7) durch den ersten Federkörper (2) so an dem Trägerkörper (3) gehalten wird, dass sein Auslöser dann betätigt wird, wenn sich die Verbindung zwischen dem ersten Federkörper (2) und dem Trägerkörper (3) löst.

9. Vorrichtung nach einem der Ansprüche 1 bis 8, **dadurch gekennzeichnet, dass** der Sensor (7) einen elektromechanischen Energiewandler enthält, welcher eine mechanische Bewegung des Auslösers in elektrische Energie umwandelt, und dass der Sensor (7) ausschließlich von dem elektromechanischen Energiewandler mit elektrischer Energie versorgt wird.

10. Vorrichtung nach Anspruch 9, **dadurch gekennzeichnet, dass** der Sensor (7) einen Sender enthält, der das Signal des Sensors (7) drahtlos ausstrahlt, wenn ihm von dem elektromechanischen Energiewandler ein elektrischer Impuls mit einer vorbestimmten Mindestenergie zugeführt wird.

11. Vorrichtung nach Anspruch 9 oder 10, **dadurch gekennzeichnet, dass** der Sensor (7) einen Sender enthält, der das Signal des Sensors (7) drahtlos ausstrahlt, und dass der Sensor (7) einen Speicher mit einem sensorspezifischen Code enthält, der ein Bestandteil des von dem Sender ausgestrahlten Signals ist.

## Claims

1. Bump stop (1) for absorbing kinetic energy in the event of a collision between two objects, comprising a first spring element (2) made of an elastic material, connected to a carrier body (3) movably supported on a support body (5), and further comprising at least one electric sensor (7) comprising a mechanically operated actuator whereby the sensor (7) emits a signal when the actuator is being activated, whereby an actuating mechanisms is provided by which the sensor (7) is actuated by a force acting on the carrier body (3) during a collision, provided that this force exceeds a predetermined value, which indicates a failure of the first spring element (2) due to wear, or, if the first spring element (2) is intact, an excessively high collision energy, **characterized in that** the carrier body (3) has a resting position in which it is held at a predetermined distance from the support body (5) by the pretension of at least a second spring element (4), so that the sensor (7) is arranged in a cavity (15) or (16) situated on the rear side of the carrier body (3) facing away from the first spring element (2) or on the front side of the support body (5) facing the carrier body (3), and that the sensor (7) comprises at least one actuating element (19) protruding from a housing (18) of the sensor (7), which is deflected when the carrier body (3) approximates the support body (5) and thereby causes the activation of the actuator of the sensor (7).

2. Apparatus according to claim 1, **characterized in that** a flange (6) arranged at support body (5) encompasses the carrier body (3) thus forming a stop against which the carrier body (3) is pushed into the resting position by the second spring element (4).

3. Apparatus according to one of claims 1 or 2, **characterized in that** the sensor (7) is fixed within the cavity (15) or (16) by a clamp (17) arranged at the carrier body (3) or the support body (5).

4. Bump stop (1) for absorbing kinetic energy in the event of a collision between two objects, comprising a first spring element (2) made of an elastic material, connected to a carrier body (3) and at least one electric sensor (7) comprising a mechanically operated actuator, whereby the sensor (7) emits a signal when the actuator is being activated, **characterized in that** the sensor (7) is arranged in relation to the carrier body (3) in such a way that the actuator is activated by a distance of the first spring element (2) from the carrier body (3), and that the sensor (7) is held by the first spring element (2) on the carrier body (3) in such a way that its actuator is activated when the connection between the first spring element (2) and the carrier body (3) is released.

5. Apparatus according to claim 4, **characterized in that** the sensor (7) comprises an actuating element (19) protruding from its housing (18), which is prestressed into a resting position by spring force and activates the sensor (7) to emit a signal, when it returns to the resting position from a position in which it has been deflected from that resting position.

6. Apparatus according to claim 4 or 5, **characterized in that** the sensor (7) is arranged in a cavity (21) situated on the rear side of the first spring element (2) or in a cavity situated on the front side of the carrier body (3)

7. Apparatus according to claim 6, **characterized in that** a retaining element (22) is arranged within the first spring element (2), which fixates the sensor (7) in a position within the cavity in which the actuating element (19) is deflected from its resting position when the first spring element (2) is connected to the carrier body (3).

8. Apparatus according to one of claims 1 to 7, **characterized in that** two sensors (7) are provided, one of which is arranged in relation to the carrier body (3) in such a way that its actuator is activated by a force acting on the carrier body (3) in the event of a collision, and the other is arranged in relation to the carrier body (3) such that its actuator is activated by a distance of the first spring element (2) from the carrier body (3), and that the other sensor (7) is held on the carrier body (3) by the first spring element (2) in such a way that its actuator is activated when the connection between the first spring element (2) and the carrier body (3) is released.

9. Apparatus according to one of claims 1 to 8, **characterized in that** the sensor (7) comprises an electromechanical energy converter which converts a mechanical movement of the actuator into electrical energy, and that the sensor (7) is supplied with electrical energy solely provided by the electromechanical energy converter.

10. Apparatus according to claim 9, **characterized in that** the sensor (7) comprises a transmitter which wirelessly transmits the signal from the sensor (7) if it receives an electrical impulse of a predetermined minimum energy from the electromechanical energy converter.

11. Apparatus according to claim 9 or 10, **characterized in that** the sensor (7) comprises a transmitter which wirelessly transmits the signal from the sensor (7), and that the sensor (7) further comprises a memory containing a sensor-specific code which is part of the emitted signal of the transmitter.

## Revendications

1. Amortisseur de choc (1) destiné à absorber l'énergie cinétique lors d'une collision entre deux objets, comportant un premier corps élastique (2) en matériau élastique qui est relié à un corps de support (3) monté de manière à pouvoir coulisser sur un corps de soutien (5), et comportant au moins un capteur (7) électrique qui présente un déclencheur pouvant être actionné mécaniquement, dont l'actionnement provoque l'émission d'un signal par le capteur (7), dans lequel un mécanisme d'actionnement est prévu, au moyen duquel le déclencheur du capteur (7) est actionné par une force agissant sur le corps de support (3) lors d'une collision lorsque ladite force dépasse une grandeur prédéterminée, laquelle grandeur indique une défaillance du premier corps élastique (2) due à l'usure ou, si le premier corps élastique (2) est intact, une énergie de collision trop élevée, **caractérisé en ce que** le corps de support (3) possède une position de repos dans laquelle il est maintenu, par la précontrainte d'au moins un second corps élastique (4), à une distance prédéterminée du corps de soutien (5), **en ce que** le capteur (7) est disposé dans une cavité (15) ou (16) réalisée sur la face arrière du corps de support (3) opposée au premier corps élastique (2) ou sur la face avant du corps de soutien (5) tournée vers le corps de support (3), **et en ce que** le capteur (7) présente au moins un organe d'actionnement (19) faisant saillie hors d'un boîtier (18) du capteur (7), lequel organe d'actionnement est dévié lors d'un rapprochement du corps de support (3) vers le corps de soutien (5) et provoque ainsi l'actionnement du déclencheur du capteur (7).

2. Dispositif selon la revendication 1, **caractérisé en ce qu'**une bride (6) reliée au corps de soutien (5) entoure le corps de support (3) et forme une butée contre laquelle le corps de support (3) est poussé par le second corps élastique (4) dans la position de repos.

3. Dispositif selon l'une des revendications 1 ou 2, **caractérisé en ce que** le capteur (7) est fixé dans la cavité (15) ou (16) à l'aide d'une pince (17) qui est fixée au corps de support (3) ou au corps de soutien (5).

4. Amortisseur de choc (1) destiné à absorber l'énergie cinétique lors d'une collision entre deux objets, comportant un premier corps élastique (2) en matériau élastique qui est relié à un corps de support (3), et comportant au moins un capteur (7) électrique qui présente un déclencheur pouvant être actionné mécaniquement, dont l'actionnement provoque l'émission d'un signal par le capteur (7), **caractérisé en ce que** le capteur (7) est disposé par rapport au corps de support (3) de telle sorte que le déclencheur est actionné par l'éloignement du premier corps élastique (2) du corps de support (3), **et en ce que** le capteur (7) est maintenu sur le corps de support (3) par le premier corps élastique (2) de telle sorte que son déclencheur est actionné lorsque la liaison entre le premier corps élastique (2) et le corps de support (3) se rompt.

5. Dispositif selon la revendication 4, **caractérisé en ce que** le capteur (7) présente un organe d'actionnement (19) faisant saillie hors de son boîtier (18), lequel organe d'actionnement est précontraint par une force élastique dans une position de repos et déclenche l'émission d'un signal par le capteur (7) lorsqu'il revient à la position de repos après avoir été dans une position déviée hors de la position de repos.

6. Dispositif selon la revendication 4 ou 5, **caractérisé en ce que** le capteur (7) est disposé dans une cavité (21) réalisée sur le côté arrière du premier corps élastique (2) ou dans une cavité réalisée sur le côté avant du corps de support (3).

7. Dispositif selon la revendication 6, **caractérisé en ce qu'**un organe de maintien (22) est disposé dans le premier corps élastique (2), lequel organe de maintien fixe le capteur (7) dans la cavité dans une position dans laquelle l'organe d'actionnement (19) possède une position déviée hors de la position de repos lorsque le premier corps élastique (2) est relié au corps de support (3).

8. Dispositif selon l'une des revendications 1 à 7, **caractérisé en ce que** deux capteurs (7) sont prévus, dont l'un est disposé par rapport au corps de support (3) de telle sorte que son déclencheur est actionné par une force agissant sur le corps de support (3) lors d'une collision, et l'autre est disposé par rapport au corps de support (3) de telle sorte que son déclencheur est actionné par l'éloignement du premier corps élastique (2) du corps de support (3), **et en ce que** l'autre capteur (7) est maintenu sur le corps de support (3) par le premier corps élastique (2) de telle sorte que son déclencheur est actionné lorsque la liaison entre le premier corps élastique (2) et le corps de support (3) se rompt.

9. Dispositif selon l'une des revendications 1 à 8, **caractérisé en ce que** le capteur (7) comprend un convertisseur d'énergie électromécanique qui transforme un mouvement mécanique du déclencheur en énergie électrique, **et en ce que** le capteur (7) est alimenté en énergie électrique exclusivement par le convertisseur d'énergie électromécanique.

10. Dispositif selon la revendication 9, **caractérisé en ce que** le capteur (7) comprend un émetteur qui envoie sans fil le signal du capteur (7) lorsqu'une impulsion électrique d'une énergie minimale prédéterminée provenant du convertisseur d'énergie électromécanique lui est amenée.

11. Dispositif selon la revendication 9 ou 10, **caractérisé en ce que** le capteur (7) comprend un émetteur qui envoie sans fil le signal du capteur (7),
**et en ce que** le capteur (7) comprend une mémoire comportant un code spécifique au capteur qui fait partie intégrante du signal envoyé par l'émetteur.
